# EUROPÄISCHE PATENTSCHRIFT

(11) **EP 2 511 075 B1**
(45) Veröffentlichungstag und Bekanntmachung des Hinweises auf die Patenterteilung: **18.09.2013**
(21) Anmeldenummer: 11162581.0
(22) Anmeldetag: 15.04.2011
(51) Int. Cl.: B29C 67/00

(54) **Formvorrichtung zum Kaltformen von Näpfen für medizinische oder pharmazeutische Produkte in eine Folie**
Forming device for cold forming blisters for medicinal or pharmaceutical products in a film
Dispositif de moulage pour le moulage à froid de godets pour produits médicaux ou pharmaceutiques dans une feuille

(43) Veröffentlichungstag der Anmeldung: 17.10.2012
(73) Patentinhaber: UHLMANN PAC-SYSTEME GmbH & Co. KG, 88471 Laupheim (DE)
(72) Erfinder: Engelhardt, Ulrich, 88471, Laupheim (DE)
(74) Vertreter: Wächter, Jochen

(56) Entgegenhaltungen:
- WO-A1-92/16354
- JP-A- 59 056 927
- JP-A- 2001 001 395

## Beschreibung

Die vorliegende Erfindung betrifft eine Formvorrichtung zum Kaltformen von Näpfen für medizinische oder pharmazeutische Produkte in eine Folie.

Bei der Herstellung von Verpackungen für medizinische oder pharmazeutische Produkte werden häufig Blisterverpackungen verwendet. Bei der Herstellung derartiger Blisterverpackungen werden in eine Formfolie Näpfe für die medizinischen oder pharmazeutischen Produkte eingeformt, die Produkte in diese Näpfe eingefüllt und die Näpfe anschließend mit einer Deckfolie versiegelt. Dabei werden als Material für die Formfolie meist Kunststoffe eingesetzt, in welche die Näpfe durch Warmformung geformt werden können. Die Deckfolie besteht in der Regel aus Aluminium oder einem Aluminiumlaminat.

In bestimmten Anwendungsfällen ist es allerdings notwendig, auch die Formfolie aus einem besonderen Material, beispielsweise Aluminium oder einem Aluminiumlaminat, herzustellen, um eine absolute Dichtigkeit, beispielsweise gegenüber Licht oder Wasserdampf, zu gewährleisten. Da es nicht möglich ist, in derartige Folien durch Warmformung entsprechende Näpfe einzubringen, ergeben sich wegen der notwendigen Kaltformung der Näpfe in die Folie Schwierigkeiten. Das Kaltformverfahren ist nämlich nicht in der Lage, Näpfe mit denselben kleinen Abmessungen wie ein vergleichbares Warmformverfahren zu liefern. Daraus resultieren mehrere Probleme. Beispielsweise kann jedes medizinische oder pharmazeutische Produkt im Napf nicht stabil auf Position gehalten werden, sodass beispielsweise die Brucherkennung der Produkte im Napf vor dessen Versiegelung mittels Kamera oder anderen Verfahren nur mit erheblicher Unschärfe durchgeführt werden kann. Außerdem besteht die Gefahr, dass das jeweilige Produkt beim Siegeln zwischen Formfolie und Deckfolie eingeklemmt werden kann. Auch die Entnahme des Produktes durch Ausdrücken ist in solchen Fällen nur auf relativ ungezielte Weise möglich.

Zum Kaltformen von Blechen ist aus der JP 59 056 927 A eine Vorrichtung bekannt, bei der ein bereits vorgeformtes Blech mit den Randbereichen auf einer Matrize aufliegt und durch einen Niederhalter an diese geklemmt wird. Anschließend wird das Blech durch Zusammenwirken eines Stempels mit einem Gegenstempel verformt, wobei der Stempel in eine von Stegen umgebene Aufnahme des Gegenstempels eindringt.

Der vorliegenden Erfindung liegt die Aufgabe zugrunde, eine Formvorrichtung zum Kaltformen von Näpfen für medizinische oder pharmazeutische Produkte in eine Folie zu schaffen, mittels derer eine lagegenaue stabile Positionierung der Produkte in den jeweiligen geformten Näpfen möglich ist und die Näpfe möglichst geringer Abmessungen erzeugt.

Diese Aufgabe wird durch die Merkmale des Anspruchs 1 gelöst.

Erfindungsgemäß umfasst die Formvorrichtung zum Kaltformen von Näpfen für medizinische oder pharmazeutische Produkte in eine Folie einen Niederhalter und eine Matrize, von denen mindestens eines relativ zum anderen bewegbar ist, um die Folie zwischen Niederhalter und Matrize in einem Bereich um eine Streckzone der Formvorrichtung herum einzuklemmen. Außerdem umfasst die Formvorrichtung mindestens einen Stempel und mindestens einen Gegenstempel, die in der Streckzone angeordnet sind und zum Einformen mindestens eines Napfes in die festgeklemmte Folie dienen, wobei mindestens einer von Stempel oder Gegenstempel relativ zum anderen in eine geschlossene Formposition der Formvorrichtung bewegbar ist. Dabei weist der Stempel einen Grundkörper mit einer Arbeitsfläche auf, wobei auf der Arbeitsfläche mindestens eine in Richtung des Gegenstempels abragende Vorwölbung im wesentlichen mittig in der Streckzone angeordnet ist und der Grundkörper an den Rändern der Arbeitsfläche und der Vorwölbung einen abgerundeten oder abgeschrägten Randbereich aufweist, wobei in der geschlossenen Formposition der Formvorrichtung die Folie sowohl an den abgerundeten oder abgeschrägten Randbereichen der Arbeitsfläche des Stempels als auch an der Vorwölbung des Stempels anliegt. Außerdem weist der Gegenstempel mindestens eine von Stegen umgebene Ausnehmung auf, in welcher die mindestens eine Vorwölbung des Stempels in der geschlossenen Formposition der Formvorrichtung aufgenommen ist, wodurch die Stege des Gegenstempels in der geschlossenen Formposition der Formvorrichtung in einem Zwischenbereich zwischen dem abgerundeten oder abgeschrägten Randbereich der Arbeitsfläche des Stempels und der Vorwölbung des Stempels an der Folie anliegen. Die Stege sind ebenfalls um die Ausnehmung nach innen abgerundet oder abgeschrägt.

Auf diese Weise wird eine Verpackung mit abgestuften Näpfen gebildet, die eine verbesserte Produktentnahme ermöglicht, eine größere Formstabilität aufweist, eine lagegenaue Positionierung der Produkte in den Näpfen gewährleistet und die Dehnung des Materials der Folie bei der Kaltformung besser einstellbar werden lässt und somit eine gleichmäßige Verformung ermöglicht. Auch die Gesamtabmessungen der Verpackungseinheit werden reduziert.

Vorzugsweise weist der abgerundete oder abgeschrägte Randbereich der Arbeitsfläche des Stempels mehrere Stufen auf. Dadurch kann das Kaltformverfahren an die jeweils vorgegebenen Rahmenbedingungen des Kaltformprozesses individueller angepasst werden.

Zur weiteren Verbesserung der Gleichmäßigkeit der Materialverformung kann die Vorwölbung an ihren Rändern auch mehrere Stufen aufweisen.

Schließlich ist es auch denkbar, dass die Stege um die Ausnehmung nach innen hin mehrere Stufen aufweisen.

In einer Ausführungsform sind sowohl der Stempel als auch der Gegenstempel relativ zueinander bewegbar, In diesem Fall kann zunächst der Stempel in eine Vorstreckposition bewegt werden, um eine Vordehnung des Materials der Folie zu bewirken und einen Abschnitt der Folie zwischen der Vorwölbung und dem abgerundeten oder abgeschrägten Randbereich der Arbeitsfläche des Stempels aufzuspannen. Im Anschluss daran wird der Gegenstempel in Richtung des Stempels bewegt, um die geschlossene Formposition der Formvorrichtung einzunehmen, wodurch dann auch der zuvor aufgespannte Abschnitt der Folie nochmals verformt wird.

Weitere Merkmale und Vorteile der vorliegenden Erfindung ergeben sich aus der nachfolgenden Beschreibung unter Bezugnahme auf die Zeichnungen.
- Fig. 1: zeigt den Ablauf der Kaltformung eines Napfes in eine Folie mit einer ersten Ausführungsform der erfindungsgemäßen Formvorrichtung in Querschnittsansicht;
- Fig. 2: zeigt den Ablauf der Kaltformung eines Napfes in eine Folie mit einer zweiten Ausführungsform der erfindungsgemäßen Formvorrichtung in zwei Querschnittsansichten;
- Fig. 3: zeigt den Ablauf der Kaltformung eines Napfes in eine Folie mit einer dritten Ausführungsform der erfindungsgemäßen Formvorrichtung in zwei Querschnittsansichten;
- Fig. 4: zeigt den Ablauf der Kaltformung eines Napfes in eine Folie mit einer vierten Ausführungsform der erfindungsgemäßen Formvorrichtung in zwei Querschnittsansichten;
- Fig. 5: zeigt den Ablauf der Kaltformung eines Napfes in eine Folie mit einer fünften Ausführungsform der erfindungsgemäßen Formvorrichtung in zwei Querschnittsansichten;
- Fig. 6: zeigt den Ablauf der Kaltformung eines Napfes in eine Folie mit einer sechsten Ausführungsform der erfindungsgemäßen Formvorrichtung in einer Querschnittsansicht; und
- Fig. 7: zeigt den Ablauf der Kaltformung eines Napfes in eine Folie mit einer siebten Ausführungsform der erfindungsgemäßen Formvorrichtung in einer Querschnittsansicht.

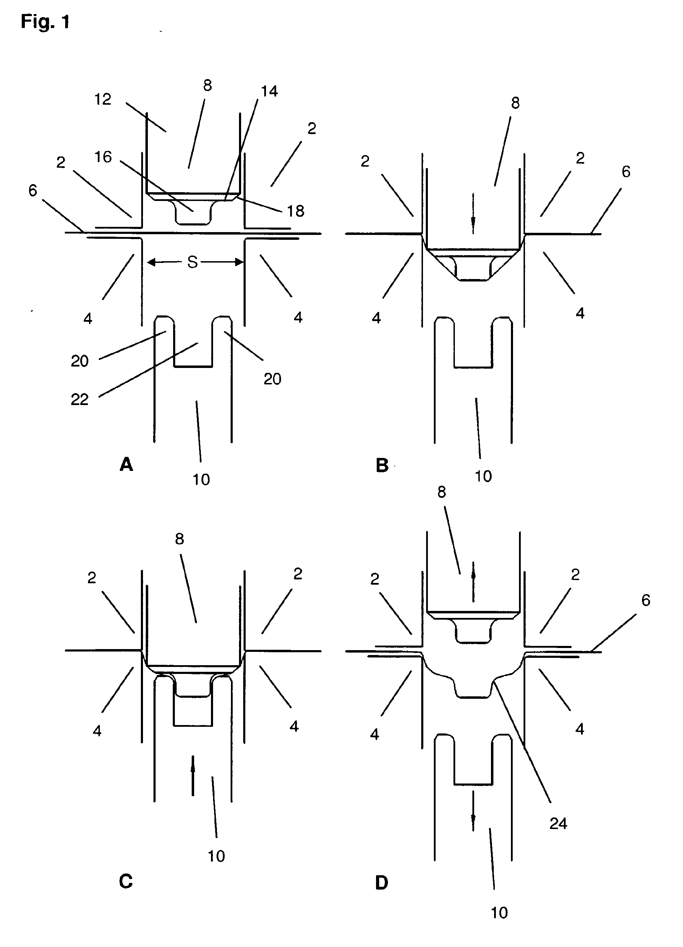

In Fig. 1 ist eine erste Ausführungsform der erfindungsgemäßen Formvorrichtung in Querschnittsansicht dargestellt. Aufgrund des symmetrischen Aufbaus der Formvorrichtung wurde hier auf eine zweite Querschnittsansicht senkrecht zur ersten Querschnittsansicht verzichtet.

Die dargestellte erste Ausführungsform der Formvorrichtung ist zur Ausbildung von runden, flachen Näpfen für medizinische oder pharmazeutische Produkte, insbesondere Tabletten, Kapseln etc. geeignet. Die Formvorrichtung weist einen Niederhalter 2 und eine Matrize 4 auf, von denen mindestens eines relativ zum anderen bewegbar ist. Üblicherweise wird lediglich der Niederhalter 2 in Richtung der Matrize 4 bewegt, um die zu formende Folie 6 zwischen Niederhalter 2 und Matrize 4 an mindestens zwei Stellen einzuklemmen. Ebenso ist es aber möglich, dass lediglich die Matrize 4 in Richtung des Niederhalters 2 bewegt wird, oder beide Elemente relativ zueinander bewegt werden können. Im freien Zwischenraum zwischen den jeweiligen, zwischen Niederhalter 2 und Matrize 4 festgeklemmten Folienabschnitten wird eine Streckzone S der Formvorrichtung gebildet, in der die Verformung der Folie 6 stattfindet.

In der Streckzone S sind ein Stempel 8 und ein Gegenstempel 10 angeordnet, die zum Einformen mindestens eines Napfes in die festgeklemmte Folie 6 dienen. Mindestens einer von Stempel 8 oder Gegenstempel 10 ist hierbei relativ zum anderen in eine in Fig. 1C abgebildete geschlossene Formposition der Formvorrichtung bewegbar.

Der Stempel 8 weist dabei einen Grundkörper 12 mit einer Arbeitsfläche 14 auf. Die Arbeitsfläche 14 erstreckt sich im dargestellten Ausführungsbeispiel im wesentlichen horizontal, kann aber auch schräge Abschnitte aufweisen, und ist immer dem Gegenstempel 10 zugewandt. Auf der Arbeitsfläche 14 ist eine in Richtung des Gegenstempels 10 abragende Vorwölbung 16 angeordnet, die sich im wesentlichen mittig in der Streckzone S befindet. Der Grundkörper 12 weist an den Rändern der Arbeitsfläche 14 einen abgerundeten oder abgeschrägten Randbereich 18 auf.

Der Gegenstempel 10 umfasst mindestens eine von Stegen 20 umgebene Ausnehmung 22, in welcher die Vorwölbung 16 des Stempels 8 in der in Fig. 1C dargestellten geschlossenen Formposition der Formvorrichtung aufgenommen ist. Die Ausnehmung 22 besitzt dabei in der dargestellten Ausführungsform im wesentlichen dieselbe Breite wie die Vorwölbung 16, sodass die Vorwölbung 16 gerade noch in die Ausnehmung 22 eintreten kann. Es sind aber abhängig von der jeweiligen Anwendung auch größere Abstände zwischen Innenwand der Ausnehmung 22 und seitlicher Wand der Vorwölbung 16 denkbar, u.a. abhängig von der gewünschten Napfform sowie den Reibwerten von Vorwölbung 16 und Folie 6.

Anhand von Fig. 1 wird nun der Verfahrensablauf des Kaltformens eines Napfes in die Folie mit der erfindungsgemäßen Formvorrichtung beschrieben. In Fig. 1A befinden sich der Niederhalter 2 und die Matrize 4 in einer voneinander beabstandeten Stellung. Ebenso sind Stempel 8 und Gegenstempel 10 voneinander beabstandet, sodass die Folie 6 unbehindert von einer nicht dargestellten Transportvorrichtung an die gewünschte Formposition transportiert werden kann.

In Fig. 1B ist die Folie 6 bereits zwischen Niederhalter 2 und Matrize 4 festgeklemmt und der Stempel 8 anschließend in eine Vorstreckposition herunterbewegt. Diese Vorstreckposition bildet gleichzeitig auch die Position des Stempels 8 in der in Fig. 1C gezeigten geschlossenen Formposition der Formvorrichtung. In dieser Position befindet sich der Randbereich 18 der Arbeitsfläche 14 des Stempels 8 unterhalb der von der Folie 6 in Fig. 1A aufgespannten horizontalen Ebene und dient somit zur Aufspannung und Streckung der Folie 6 in einem Bereich nahe dem Klemmbereich zwischen Niederhalter 2 und Matrize 4. Der Abstand zwischen Stempel 8 und Niederhalter 2 bzw. Matrize 4 kann dabei je nach Anwendungsfall variieren, ist aber in der Regel sehr gering.

In der geschlossenen Formposition der Formvorrichtung liegt also die Folie 6 sowohl an dem Randbereich 18 der Arbeitsfläche 14 des Stempels 8 als auch an der Vorwölbung 16 des Stempels 8 an. Gemäß Fig. 1B wird somit zwischen der Vorwölbung 16 und dem Randbereich 18 der Arbeitsfläche 14 des Stempels 8 ein Abschnitt der Folie 6 aufgespannt, auf welchen wiederum die Stege 20 des Gegenstempels 10 eine verformende Wirkung ausüben, wenn sie sich in Richtung der geschlossenen Formposition der Formvorrichtung (siehe Fig. 1 C) bewegen. In der geschlossenen Formposition der Formvorrichtung liegen demnach die Stege 20 des Gegenstempels 10 in einem Zwischenbereich zwischen dem Randbereich 18 der Arbeitsfläche 14 des Stempels 8 und der Vorwölbung 16 des Stempels 8 an der Folie 6 an. Auf diese Weise wurde in einem zweistufigen Verfahren eine stufenförmige Geometrie des Napfes 24 ausgebildet, wie sie in Fig. 1D dargestellt ist. Auf diese Weise kann eine wohldefinierte, Material schonende und gleichmäßige Kaltformung eines Napfes 24 in die Folie 6 erzielt werden.

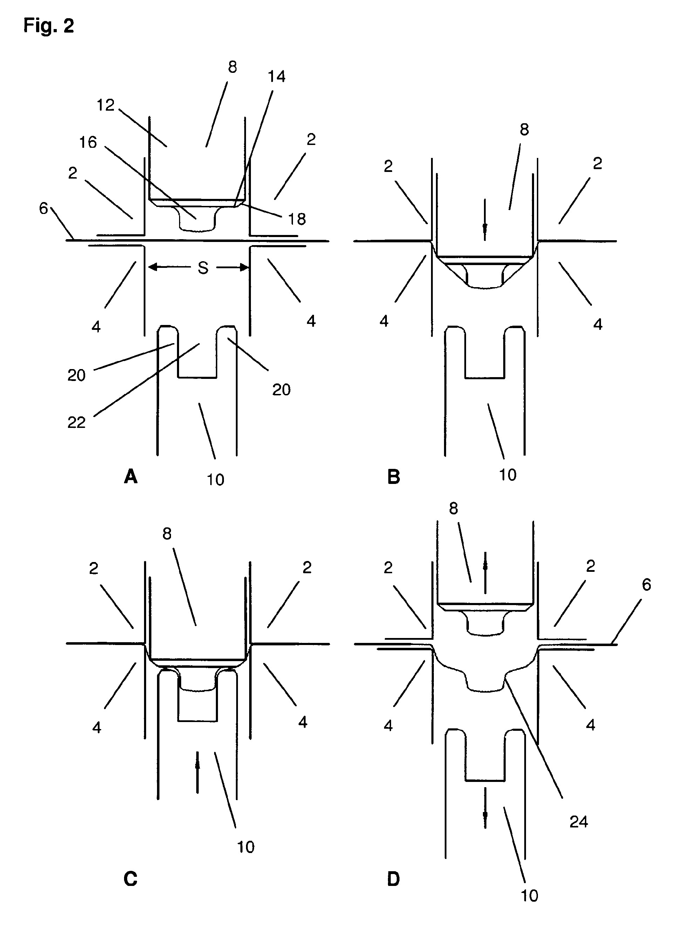

Die in Fig. 2 dargestellte zweite Ausführungsform der erfindungsgemäßen Formvorrichtung ist zur Formung von runden, konvexen Näpfen geeignet. Der einzige Unterschied zur Ausführungsform aus Fig. 1 liegt in der konvex geformten Bodenfläche der Vorwölbung 16.

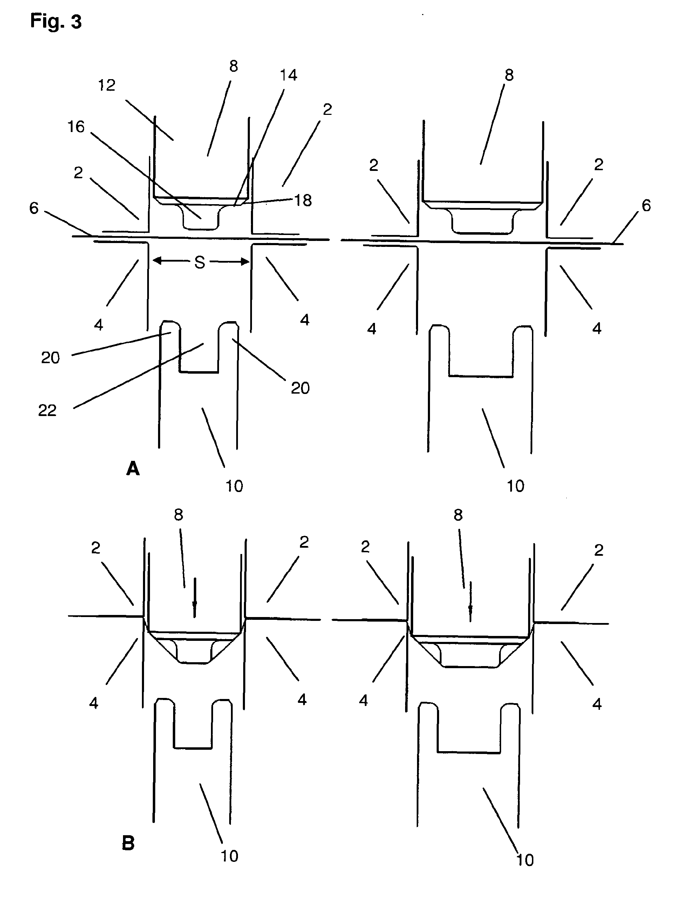

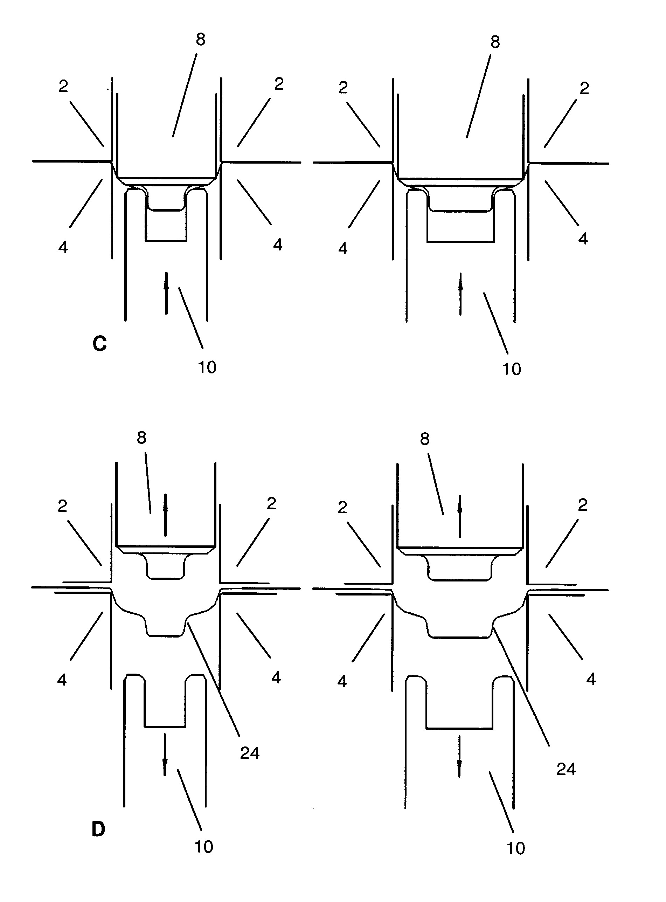

Die in Fig. 3 dargestellte dritte Ausführungsform der erfindungsgemäßen Formvorrichtung ist insbesondere für Näpfe geeignet, welche ovale flache Produkte aufnehmen sollen. Man erkennt hierbei aus den beiden jeweils nebeneinander angeordneten Querschnittsansichten in zwei senkrecht zueinander stehenden Richtungen, dass die Näpfe 24 in der zweiten Richtung eine größere Ausdehnung als in der ersten Richtung aufweisen. Ansonsten ist das in Fig. 1 und 2 beschriebene Prinzip der Kaltformung unverändert.

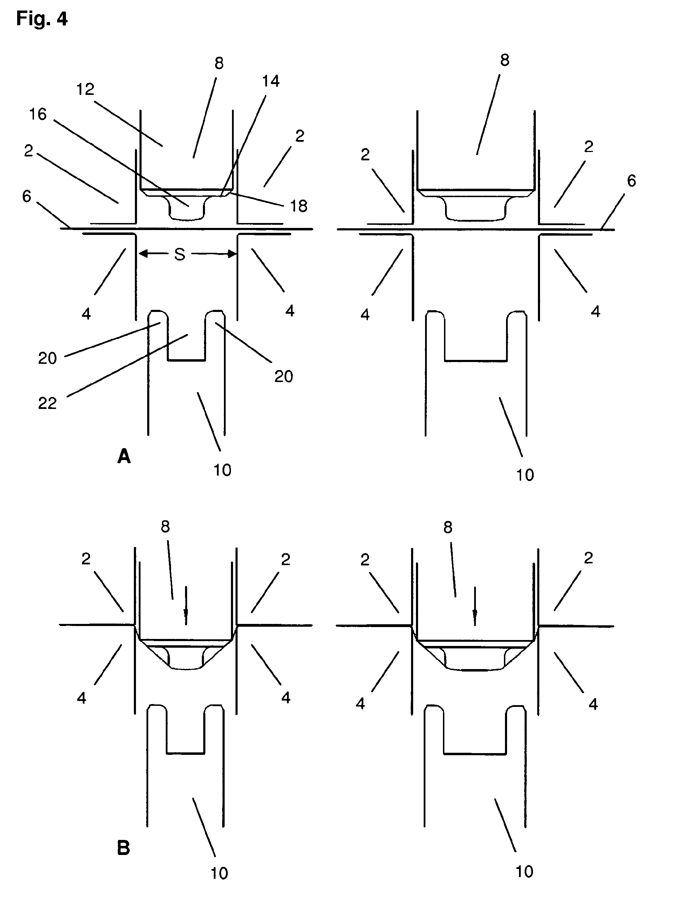

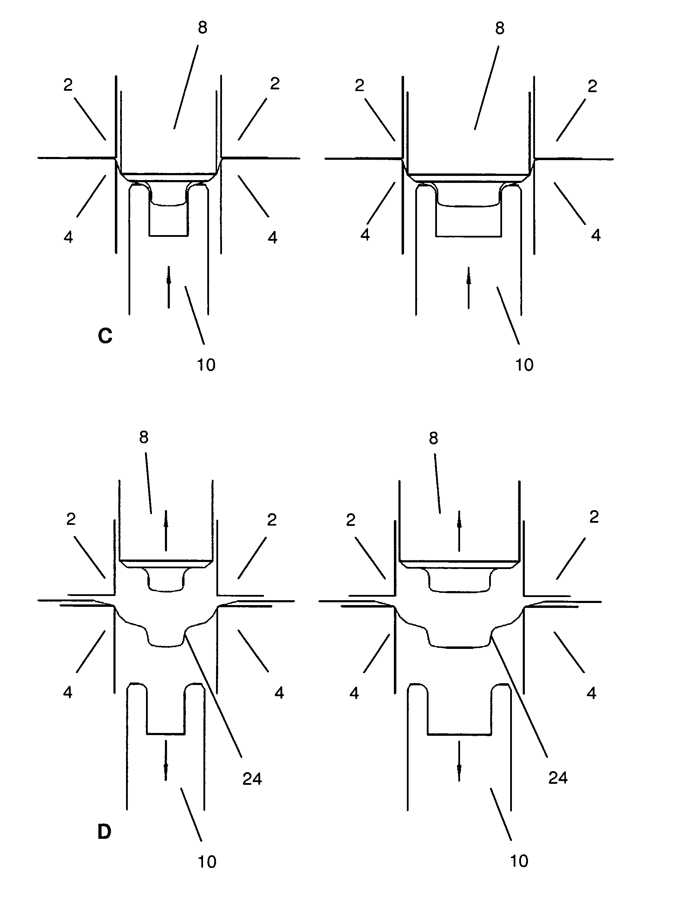

In Fig. 4 ist eine vierte Ausführungsform der erfindungsgemäßen Formvorrichtung dargestellt, welche insbesondere für die Ausbildung von Näpfen zur Aufnahme von länglichen, konvexen Produkten geeignet sind. Der Unterschied zur Ausführungsform der Fig. 3 liegt in der konvex geformten Bodenfläche der Vorwölbung 16. Die verschiedenen Ansichten sowie die Funktionsweise der Formvorrichtung entsprechen der Ausführungsform aus Fig. 3.

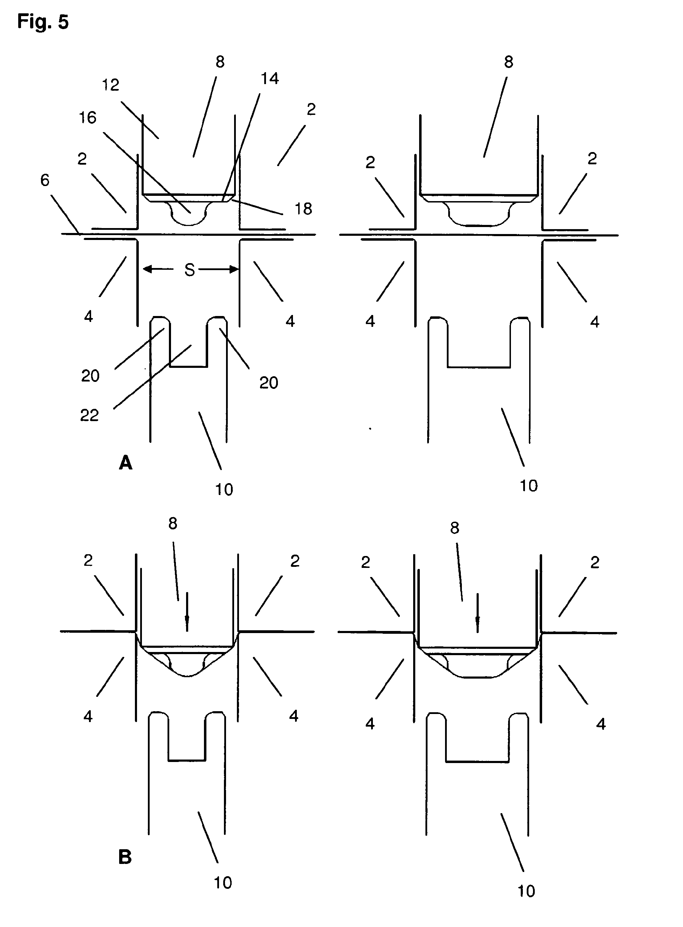

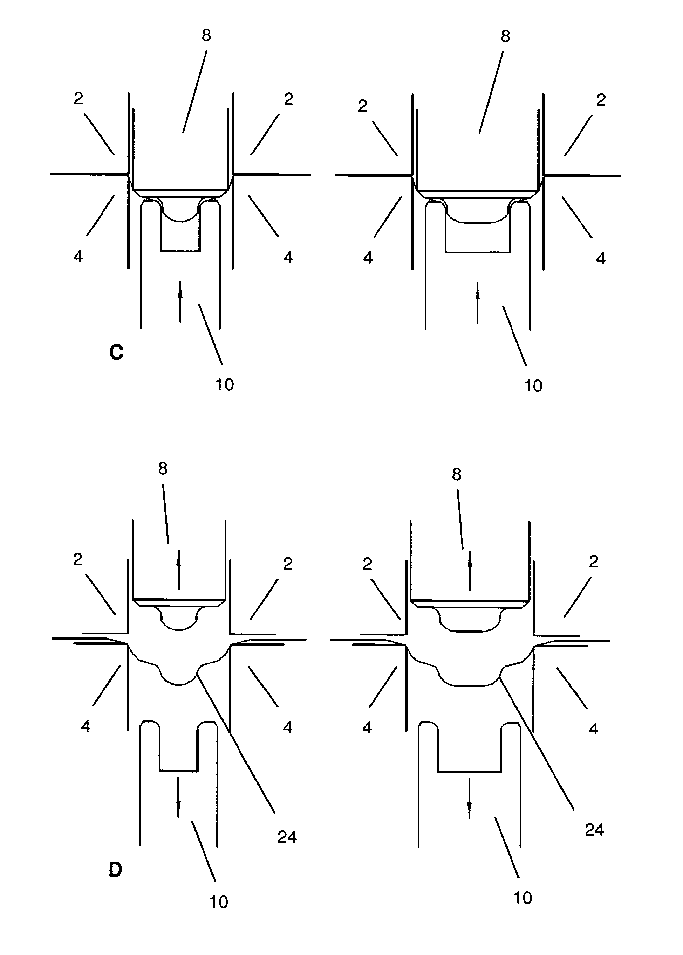

In Fig. 5 ist eine fünfte Ausführungsform der erfindungsgemäßen Formvorrichtung dargestellt, die für eine Kaltformung von Näpfen geeignet ist, welche kapselförmige Produkte aufnehmen sollen. Die verschiedenen Ansichten sowie die Funktionsweise der Formvorrichtung entsprechen den Ausführungsformen von Fig. 3 und Fig. 4. Man erkennt allerdings, dass die Vorwölbung 16 stärker konvex ausgebildet ist.

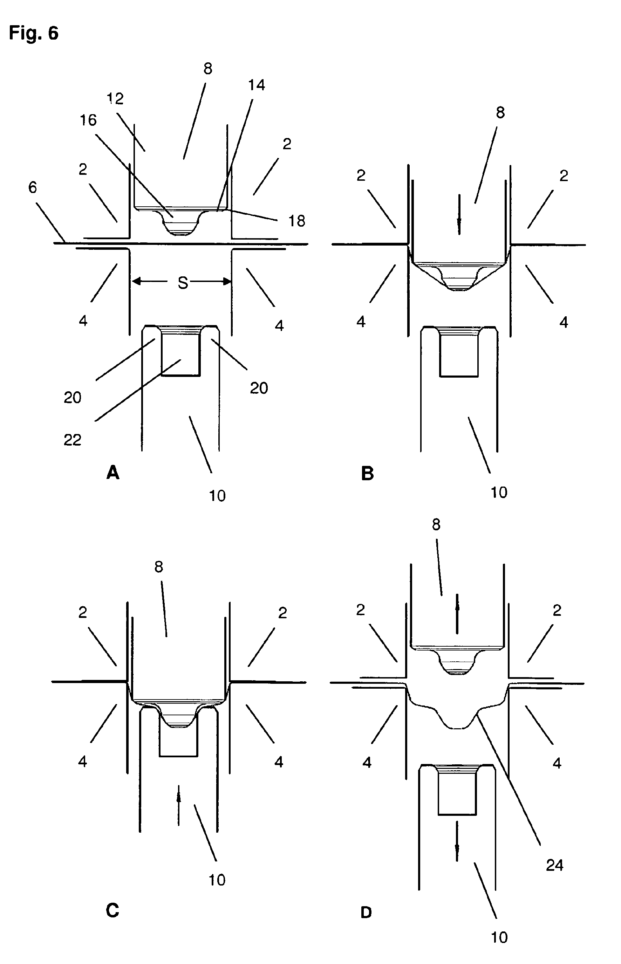

Die in Fig. 6 dargestellte sechste Ausführungsform der erfindungsgemäßen Formvorrichtung ist wiederum für die Kaltformung von Näpfen für runde, flache Produkte geeignet, siehe Fig. 1. Allerdings weist hier der abgerundete oder abgeschrägte Randbereich 18 der Arbeitsfläche 14 des Stempels 8 mehrere Stufen auf, die durch die dünnen Linien skizziert sind. Außerdem ist die Vorwölbung 16 an ihren Rändern abgerundet oder abgeschrägt und weist dort mehrere Stufen auf. Schließlich sind auch die Stege 20 des Gegenstempels 10 um die Ausnehmung 22 herum nach innen abgerundet oder abgeschrägt und weisen nach innen hin mehrere Stufen auf.

Die jeweiligen Rundungen bzw. Abschrägungen der oben genannten Komponenten können jeweils einzeln vorliegen oder in Kombination miteinander verwendet werden. Ebenso können die Stufen in den verschiedenen Elementen jeweils nur in einzelnen Elementen oder in mehreren Elementen ausgebildet sein. Unter "Stufen" wird hierbei jede Form von gradueller Änderung des Außendurchmessers bzw. der Neigung oder auch der Oberflächenbeschaffenheit der jeweiligen Elemente verstanden. Durch die Stufen wird eine abgestufte, feingliedrigere Dehnung der Folie 6 erzielt, ohne das Material über die Maßen zu beanspruchen. Dies kann für eine gleichmäßige Materialdicke und die zuverlässige Funktion der Formvorrichtung relevant sein.

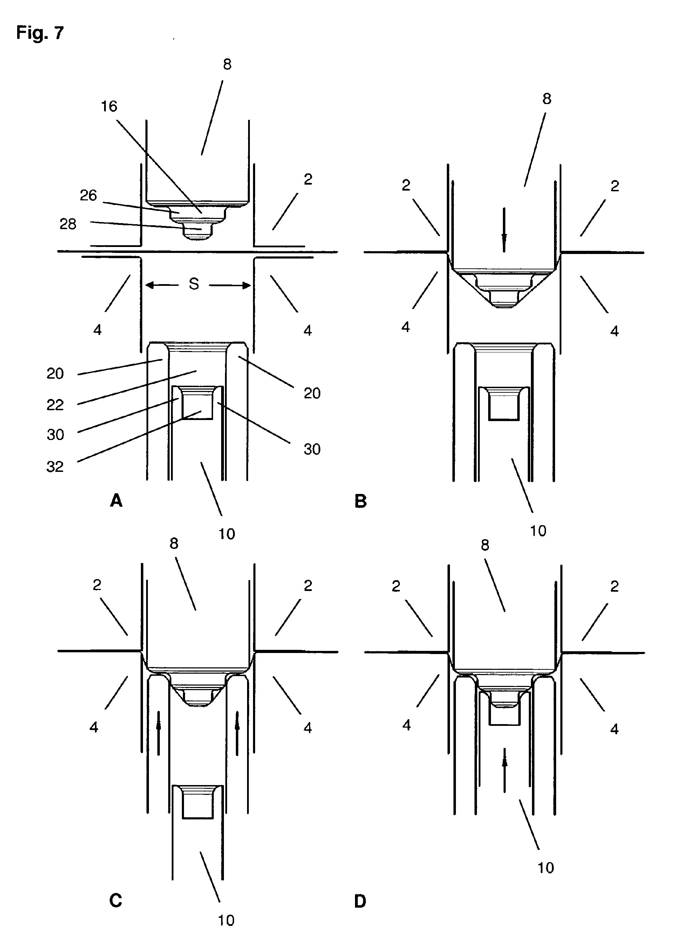

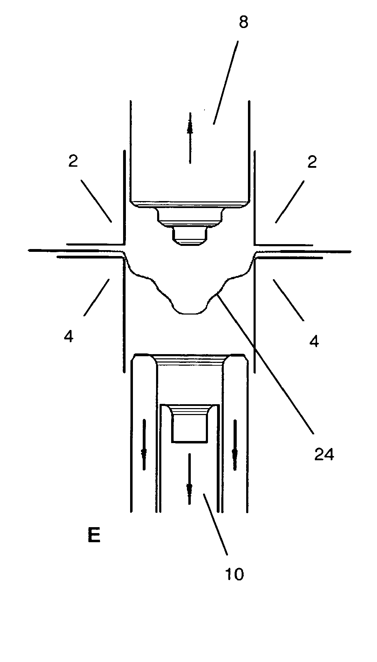

In Fig. 7 ist eine siebte Ausführungsform der erfindungsgemäßen Formvorrichtung dargestellt. Dabei ist die Vorwölbung 16 des Stempels 8 als zweistufiges Element mit einer breiten Basis 26 und einer schmaleren Spitze 28 ausgebildet. Im Gegenzug ist der Gegenstempel 10 ebenfalls zweiteilig ausgestaltet, wobei die Stege 20 des äußeren Teils des Gegenstempels 10 auf den Folienabschnitt zwischen dem Randbereich 18 der Arbeitsfläche 14 des Stempels 8 und dem Randbereich der Basis 26 der Vorwölbung 16 wirken und die inneren Stege 30 des inneren Teils des Gegenstempels 10 auf den Folienabschnitt wirken, der sich zwischen dem Randbereich der Basis 26 und der Spitze 28 der Vorwölbung 16 erstreckt. Hierdurch wird ein Formverfahren mit mehr als zwei Stufen geschaffen. Der innere und äußere Teil des Gegenstempels 10 können hierbei entweder gemeinschaftlich oder separat voneinander angetrieben sein. Ebenfalls können an den verschiedenen Randbereichen der Elemente wiederum Stufen ausgebildet sein. Eine Kombination verschiedener Einzelheiten der unterschiedlichen Ausführungsformen ist möglich.

Grundsätzlich gilt, dass die dargestellten Abmessungen der einzelnen Elemente und deren Relation zueinander je nach Anwendungsgebiet variieren können. Hierbei ist insbesondere das Material und der Reibwert von Folie 6, Stempel 8 und Gegenstempel 10 sowie die Form und Kontur der zu verpackenden Produkte zu berücksichtigen. Als Produkte kommen neben den bereits erwähnten Tabletten oder Kapseln auch Ampullen oder alle anderen medizinischen oder pharmazeutischen Gegenstände und sogar technische Gegenstände in Betracht. Ebenso können mit diesem Verfahren auch Versteifungssicken in die Folie geformt werden.

Als Material für Niederhalter 2 und Matrize 4 kommen insbesondere Aluminium, Stahl oder harte Kunststoffe in Frage. Der Stempel 8 sowie der Gegenstempel 10 bestehen üblicherweise aus Edelstahl, beschichtetem Aluminium oder speziellen harten Kunststoffen. Die eingeformten Näpfe 24 besitzen üblicherweise eine Tiefe von 2 bis 50 mm. Die mit diesem Verfahren zu verformenden Folien 6 sind üblicherweise Aluminiumfolien oder Laminate aus Polyamid/Aluminium/PVC. Es kommen aber auch Polyethylenfolien oder Polypropylenfolien und alle möglichen Kombination der vorgenannten Materialien in Betracht.

Gemäß den beschriebenen Ausführungsformen wurde jeweils die Absenkung des Stempels 8 und die anschließende Gegenbewegung des Gegenstempels 10 beschrieben. Ebenso ist es möglich, dass sich der Gegenstempel 10 bereits vor dem Absenken des Stempels 8 in seiner stationären Endposition befindet, wie sie beispielsweise in Fig. 1C dargestellt ist, und dass der Stempel 8 durch seine Abwärtsbewegung bereits für die vollständige Ausformung des stufenförmigen Napfes 24 sorgt.

Als Antriebe für Niederhalter 2, Matrize 4, Stempel 8 und Gegenstempel 10 kommen hierbei alle möglichen mechanischen, pneumatischen oder hydraulischen Antriebe in Frage. Der Gegenstempel 10 kann dabei entweder stationär sein, sich mit der Matrize 4 gemeinsam bewegen oder einen getrennten Antrieb aufweisen.

In den dargestellten Beispielsfällen ist jeweils nur ein Paar von Stempel 8 und Gegenstempel 10 dargestellt. In Wirklichkeit sind oftmals mehrere Paare von Stempel 8 und Gegenstempel 10 parallel zueinander angeordnet, um beispielsweise Blisterverpackungen mit mehreren Näpfen 24 auszubilden. Auch ist in den dargestellten Ausführungsbeispielen auf jedem Stempel 8 lediglich eine Vorwölbung 16 angeordnet. Es können aber auch mehrere Vorwölbungen 16 pro Stempel 8 vorgesehen sein.

## Patentansprüche

1. Formvorrichtung zum Kaltformen von Näpfen (24) für medizinische oder pharmazeutische Produkte in eine Folie (6), mit
einem Niederhalter (2) und einer Matrize (4), von denen mindestens eines relativ zum anderen bewegbar ist, um die Folie (6) zwischen Niederhalter (2) und Matrize (4) in einem Bereich um mindestens eine Streckzone (S) der Formvorrichtung herum einzuklemmen,
mindestens einem Stempel (8) und mindestens einem Gegenstempel (10), die in der Streckzone (S) angeordnet sind und zum Einformen mindestens eines Napfes (24) in die festgeklemmte Folie (6) dienen, wobei mindestens einer von Stempel (8) oder Gegenstempel (10) relativ zum anderen in eine geschlossene Formposition der Formvorrichtung bewegbar ist,
wobei der Stempel (8) einen Grundkörper (12) mit einer Arbeitsfläche (14) aufweist, wobei auf der Arbeitsfläche (14) mindestens eine in Richtung des Gegenstempels (10) abragende Vorwölbung (16) im wesentlichen mittig in der Streckzone (S) angeordnet ist und der Grundkörper (12) an den Rändern der Arbeitsfläche (14) einen Randbereich (18) aufweist, wobei in der geschlossenen Formposition der Formvorrichtung die Folie (6) sowohl an dem Randbereich (18) der Arbeitsfläche (14) des Stempels (8) als auch an der Vorwölbung (16) des Stempels (8) anliegt, und
wobei der Gegenstempel (10) mindestens eine von Stegen (20) umgebene Ausnehmung (22) aufweist, in welcher die mindestens eine Vorwölbung (16) des Stempels (8) in der geschlossenen Formposition der Formvorrichtung aufgenommen ist, wodurch die Stege (20) des Gegenstempels (10) in der geschlossenen Formposition der Formvorrichtung in einem Zwischenbereich zwischen dem Randbereich (18) der Arbeitsfläche (14) des Stempels (8) und der Vorwölbung (16) des Stempels (8) an der Folie (6) anliegen,
wobei
der Randbereich (18) an den Rändern der Arbeitsfläche (14) des Grundkörpers (12) des Stempels (8) abgerundet oder abgeschrägt ist,
die Vorwölbung (16) an ihren Rändern abgerundet oder abgeschrägt ist, und
die Stege (20) um die Ausnehmung (22) nach innen abgerundet oder abgeschrägt sind.

2. Formvorrichtung nach Anspruch 1, **dadurch gekennzeichnet, dass** der abgerundete oder abgeschrägte Randbereich (18) der Arbeitsfläche (14) des Stempels (8) mehrere Stufen aufweist.

3. Formvorrichtung nach Anspruch 1 oder 2, **dadurch gekennzeichnet, dass** die Vorwölbung (16) an ihren Rändern mehrere Stufen aufweist.

4. Formvorrichtung nach einem der vorangehenden Ansprüche, **dadurch gekennzeichnet, dass** die Stege (20) um die Ausnehmung (22) nach innen hin mehrere Stufen aufweisen.

5. Formvorrichtung nach einem der vorangehenden Ansprüche, **dadurch gekennzeichnet, dass** sowohl der Stempel (8) als auch der Gegenstempel (10) relativ zueinander bewegbar sind.

6. Formvorrichtung nach Anspruch 5, **dadurch gekennzeichnet, dass** zunächst der Stempel (8) in eine Vorstreckposition bewegbar ist und anschließend der Gegenstempel (10) gegensinnig bewegbar ist, um die geschlossene Formposition der Formvorrichtung zu bildern.

## Claims

1. Forming device for cold-forming blisters (24) for medicinal or pharmaceutical products in a foil (6),
with a hold-down clamp (2) and a matrix (4) of which at least one is movable relative to the other in order to clamp the foil (6) between the hold-down clamp (2) and the matrix (4) in a region about at least one stretch zone (S) of the forming device,
at least one ram (8) and at least one counter-ram (10) which are arranged in the stretch zone (S) and serve to form at least one blister (24) in the firmly clamped foil (6), wherein at least one of the rams (8) or counter rams (10) is movable relative to the other into a closed forming position of the forming device,
wherein the ram (8) has a base body (12) with a working face (14), wherein at least one forward curvature (16) projecting in the direction of the counter ram (10) is arranged on the work face (14) substantiaily centrally in the stretch zone (S) and the base body (12) has on the edges of the work face (14) an edge region (18) wherein in the closed forming position of the forming device the foil (6) bears against both the edge region (18) of the work face (14) of the ram (8) and also against the forward curvature (16) of the ram (8), and
wherein the counter ram (10) has at least one recess (22) surrounded by webs (20) in which the at least one forward curvature (16) of the ram (8) is received in the closed forming position of the forming device, whereby the webs (20) of the counter ram (10) in the closed forming position of the forming device adjoin against the foil (6) in the intermediate area between the edge region (18) of the work face (14) of the ram (8) and the forward curvature (16) of the ram (8),
wherein the edge region (18) is rounded or chamfered at the edges of the work face (14) of the base body (12) of the ram (8),
the forward curvature (16) is rounded or chamfered at its edges, and
the webs (20) are rounded or chamfered inwards around the recess (22).

2. Forming device according to claim 1 **characterised in that** the rounded or chamfered edge region (18) of the work face (14) of the ram (8) has several steps.

3. Forming device according to claim 1 or 2 **characterised in that** the forward curvature (16) has several steps at its edges.

4. Forming device according to one of the preceding claims **characterised in that** the webs (20) have several steps inwards around the recess (22).

5. Forming device according to one of the preceding claims **characterised in that** both the ram (8) and the counter ram (10) are movable relative to one another.

6. Forming device according to claim 5 **characterised in that** first the ram (8) is movable into a forward stretched position and then the counter ram (10) is movable in the opposite sense in order to form the closed forming position of the forming device.

## Revendications

1. Dispositif de moulage destiné au moulage à froid d'alvéoles (24) pour produits médicaux ou pharmaceutiques dans une feuille (6), comprenant
un serre-flan (2) et une matrice (4), dont l'un au moins est déplaçable par rapport à l'autre, afin de coincer la feuille (6) entre le serre-flan (2) et la matrice (4) dans une zone autour d'au moins une zone d'étirement (S) du dispositif de moulage,
au moins un poinçon (8) et au moins un contre-poinçon (10), qui sont disposés dans la zone d'étirement (S) et servent au formage d'au moins une alvéole (24) dans la feuille (6) coincée, au moins l'un du poinçon (8) ou contre-poinçon (10) étant déplaçable l'un par rapport à l'autre dans une position de fermeture du moule du dispositif de moulage,
le poinçon (8) présentant un corps de base (12) avec une surface de travail (14), au moins un prëbombage (16), dépassant en direction du contre-poinçon (10), étant disposé sur la surface de travail (14) essentiellement au centre de la zone d'étirement (S) et le corps de base (12) présentant sur les bords de la surface de travail (14) une zone de bordure (18), la feuille (6), dans la position de fermeture du moule du dispositif de moulage, s'appliquant aussi bien sur la zone de bordure (18) de la surface de travail (14) du poinçon (8) que sur le prébombage (16) du poinçon (8), et
le contre-poinçon (10) présentant au moins un creux (22) entouré par des traverses (20), creux dans lequel le au moins un prébombage (16) du poinçon (8) est reçu dans la position de fermeture du moule du dispositif de moulage, les traverses (20) du contre-poinçon (10), dans la position de fermeture du moule du dispositif de moulage, s'appliquant de ce fait sur la feuille (6) dans une zone intermédiaire entre la zone de bordure (18) de la surface de travail (14) du poinçon (8) et le prébombage (16) du poinçon (8),
la zone de bordure (18), sur les bords de la surface de travail (14) du corps de base (12) du poinçon (8), étant arrondie ou chanfreinée,
le prébombage (16) étant arrondi ou chanfreiné sur ses bords, et
les traverses (20) autour du creux (22) étant arrondies ou chanfreinées vers l'intérieur.

2. Dispositif de moulage selon à revendication 1, **caractérisé en ce que** la zone de bordure (18) arrondie ou chanfreinée de la surface de travail (14) du poinçon (8) présente plusieurs étages.

3. Dispositif de moulage selon l'une des revendications 1 et 2, **caractérisé en ce que** le prébombage (16) présente sur ses bords plusieurs étages.

4. Dispositif de moulage selon l'une des revendications précédentes, **caractérisé en ce que** les traverses (20) autour du creux (22) présentent plusieurs étages en direction de l'intérieur.

5. Dispositif de moulage selon l'une des revendications précédentes, **caractérisé en ce que** aussi bien le poinçon (8) que le contre-poinçon (10) sont déplaçables l'un par rapport à l'autre.

6. Dispositif de moulage selon la revendication 5, **caractérisé en ce que** le poinçon (8) est d'abord déplaçable dans une position de pré-étirement, puis le contre-poinçon (10) est déplaçable dans le sens contraire, afin de former la position de fermeture du moule du dispositif de moulage.
